Europäisches Patentamt

European Patent Office

Office européen des brevets

(19)

(11) Numéro de publication : **0 469 962 A1**

# (12) DEMANDE DE BREVET EUROPEEN

(21) Numéro de dépôt : **91402050.8**

(22) Date de dépôt : **23.07.91**

(51) Int. Cl.⁵ : **G21C 17/10,** G21C 19/10,
E21B 31/00

(30) Priorité : **03.08.90 FR 9009964**

(43) Date de publication de la demande :
**05.02.92 Bulletin 92/06**

(84) Etats contractants désignés :
**BE ES**

(71) Demandeur : **FRAMATOME**
**Tour Fiat 1, Place de la Coupole**
**F-92400 Courbevoie (FR)**

(72) Inventeur : **Denoiseux, Michel**
**1 allée de la Croix Rompue**
**F-78124 Mareil sur Mauldre (FR)**
Inventeur : **Leger, Christian**
**2 bis rue Guynemer**
**F-91700 Sainte Genevieve des Bois (FR)**

(74) Mandataire : **Bouget, Lucien et al**
**Cabinet Lavoix 2, Place d'Estienne d'Orves**
**F-75441 Paris Cédex 09 (FR)**

(54) **Procédé et dispositif d'extraction d'un corps allongé introduit axialement dans un élément tubulaire.**

(57) On exerce une traction sur une des extrémités du corps allongé (3) dans la direction axiale de l'élément tubulaire (4). Le corps allongé (3) est mis en vibrations pendant qu'on exerce une traction sur son extrémité. On émet des ondes ultrasonores depuis l'extrémité du corps allongé (3) sur laquelle on exerce la traction et dans la direction axiale pour assurer sa mise en vibrations. Les moyens de mise en vibrations sont constitués par un générateur d'ultrasons (26) associé à un transducteur (30) intercalé entre un moyen de traction (6, 7) et l'extrémité du corps allongé (3).

EP 0 469 962 A1

FIG_2

L'invention concerne un procédé et un dispositif d'extraction d'un corps allongé introduit dans un élément tubulaire, suivant sa direction axiale.

Dans le domaine de l'exploitation des réacteurs nucléaires refroidis par de l'eau et en particulier dans le cas des réacteurs nucléaires refroidis par de l'eau sous pression, il peut être nécessaire de réaliser des opérations d'extraction de corps allongés introduits dans un élément tubulaire.

En particulier, l'instrumentation du coeur du réacteur comporte des thermocouples qui sont engagés à l'intérieur de colonnes de thermocouple traversant le couvercle de la cuve du réacteur dans une direction verticale et dans le prolongement de tubes de guidage des équipements internes supérieurs du réacteur, de manière que les thermocouples puissent être introduits dans le coeur du réacteur situé en-dessous des équipements internes supérieurs.

Pour effectuer des opérations de réparation ou d'entretien du réacteur nucléaire, il peut être nécessaire d'ouvrir le couvercle de la cuve, après refroidissement et dépressurisation du réacteur, pour accéder aux composants situés à l'intérieur de la cuve. De même, pour effectuer le déchargement et le rechargement des assemblages combustibles du coeur, il est nécessaire d'ouvrir le couvercle de la cuve et de sortir les équipements internes supérieurs de cette cuve.

Ces opérations nécessitent qu'on effectue préalablement une extraction des thermocouples engagés dans les colonnes de thermocouple, dans les équipements internes supérieurs et dans les assemblages du coeur.

Les réacteurs nucléaires à eau sous pression comportent également des tubes d'instrumentation traversant le fond de la cuve du réacteur situé dans une position opposée par rapport au couvercle assurant le passage de doigts de gant à l'intérieur de la cuve et le guidage de ces doigts de gant jusqu'à un local d'instrumentation situé au voisinage du puits de la cuve du réacteur. Des sondes de mesure de flux neutronique peuvent être introduites et déplacées à l'intérieur des doigts de gant.

Pour effectuer le déchargement et le rechargement du coeur du réacteur, il est nécessaire d'extraire les doigts de gant des tubes d'instrumentation par traction sur une extrémité du doigt de gant située à l'intérieur du local d'instrumentation.

Dans le cas de l'extraction des thermocouples dont une partie d'extrémité est saillante par rapport à l'extrémité supérieure de la colonne de thermocouple correspondante, l'extraction du thermocouple est réalisée en exerçant une traction dans la direction verticale et dirigée vers le haut sur l'extrémité saillante du thermocouple. Dans le cas des doigts de gant, on exerce de même une traction sur l'extrémité du doigt de gant située dans le local d'instrumentation, dans une direction qui peut être horizontale.

Dans les deux cas, l'extraction peut être rendue difficile par le fait qu'il existe des forces de frottement dans les parties coudées et droites de l'élément tubulaire, ou encore que des dépôts solides ont pu se former autour du thermocouple ou du doigt de gant, par exemple à l'intérieur du canal correspondant traversant la colonne de thermocouple ou à l'intérieur du tube d'instrumentation. De tels dépôts peuvent être constitués par des produits de corrosion qui se forment à l'intérieur du réacteur, pendant son fonctionnement, par mise en contact du fluide de refroidissement avec certains composants, par des particules de corps étrangers entraînés par le fluide de refroidissement du réacteur ou par des dépôts de nature chimique quelconque se formant in situ à l'intérieur du canal de passage du thermocouple ou du doigt de gant.

La force de traction nécessaire pour extraire le thermocouple ou le doigt de gant peut devenir excessive, ce qui peut se traduire par une rupture du thermocouple ou du doigt de gant pendant son extraction.

On a donc proposé, par exemple dans la demande de brevet EP-A-0.175.977, de soumettre le thermocouple en cours d'extraction à des vibrations susceptibles de provoquer le fractionnement des dépôts provoquant le blocage du thermocouple. Pour assurer la mise en vibration du thermocouple, on a proposé de fixer sur le dispositif de traction dans sa partie reliée au thermocouple, un vibreur émettant des ondes dans une direction inclinée par rapport à l'axe du canal de guidage du thermocouple dans la colonne de thermocouple, suivant lequel on exerce la traction. L'inclinaison de la direction de propagation des ondes vibratoires par rapport à l'axe de traction est généralement voisine de 20°.

Le dispositif correspondant est relativement complexe et encombrant, dans la mesure où il nécessite la présence d'un vibreur placé dans une position latérale par rapport à l'axe de traction.

En outre, le vibreur est préréglé à une fréquence de vibrations fixe, ce qui ne permet pas de moduler l'effet des vibrations en fonction de la position et de la nature des dépôts provoquant le blocage du thermocouple.

Le but de l'invention est donc de proposer un procédé d'extraction d'un corps allongé introduit dans un élément tubulaire suivant sa direction axiale, par traction sur une de ses extrémités dans la direction axiale de l'élément tubulaire et par mise en vibrations simultanée de ce corps allongé, ce procédé permettant de limiter la force de traction nécessaire, dans le cas où le corps allongé est bloqué par des forces de frottement dans les parties coudées et/ou droites de l'élément tubulaire, ou encore par des dépôts de matière solide à l'intérieur du corps tubulaire, tout en utilisant un dispositif simple et peu encombrant.

Dans ce but, on émet des ondes dans un domaine de fréquence proche des ondes ultrasonores depuis l'extrémité du corps allongé sur laquelle on exerce la traction et dans sa direction axiale, pour assurer sa mise en vibration et on effectue un réglage de la fréquence des ondes ultrasonores, de manière à déplacer le long du corps allongé les ventres et les noeuds de vibration engendrés dans le corps allongé par les ondes ultrasonores.

L'invention est également relative à un dispositif d'extraction mettant en oeuvre le procédé suivant l'invention.

Afin de bien faire comprendre l'invention, on va maintenant décrire, à titre d'exemple non limitatif, en se référant aux figures jointes en annexe, un mode de réalisation du procédé suivant l'invention et du dispositif correspondant dans le cas de l'extraction d'un thermocouple d'un réacteur nucléaire à eau sous pression.

La figure 1 est une vue générale du bâtiment réacteur dans lequel on effectue une opération d'extraction d'un thermocouple, en utilisant le procédé suivant l'invention.

La figure 2 est une vue d'ensemble d'un dispositif d'extraction suivant l'invention.

La figure 3 est une vue en perspective montrant les moyens de mise en vibrations du corps allongé du dispositif d'extraction représenté sur la figure 2.

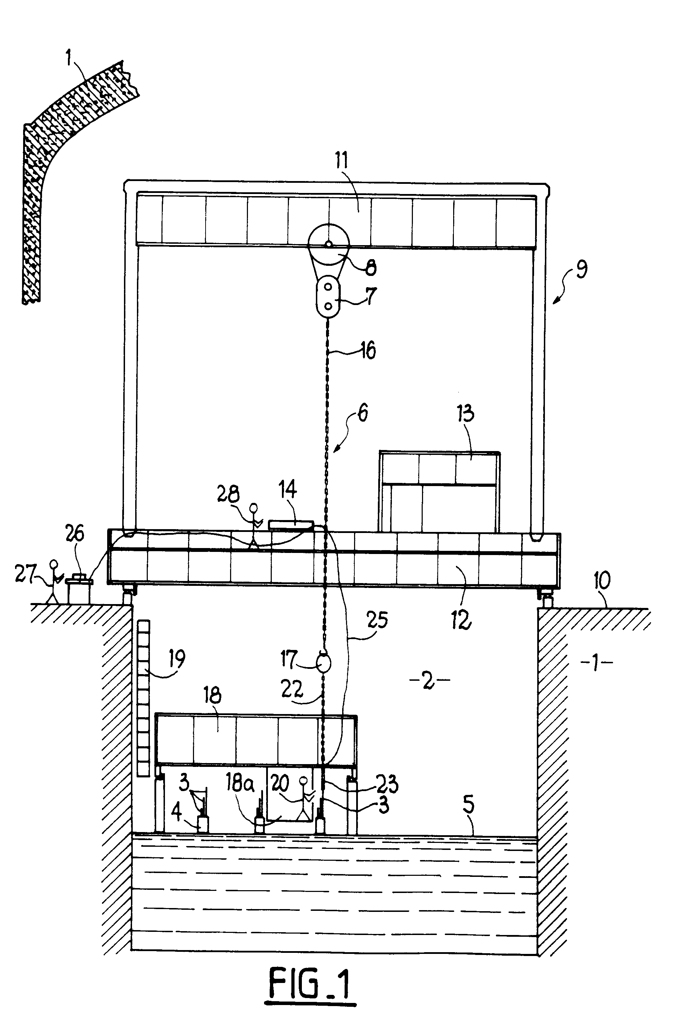

Sur la figure 1, on a représenté de manière schématique, le bâtiment réacteur 1 d'une centrale nucléaire comportant un réacteur refroidi par de l'eau sous pression.

Le bâtiment réacteur 1 est réalisé sous la forme d'une structure en béton de grandes dimensions délimitant une piscine 2 placée à la verticale d'un puits de cuve dans lequel est placée la cuve du réacteur nucléaire renfermant les assemblages du coeur.

Lorsqu'on effectue une opération d'extraction de thermocouples 3 pénétrant dans la cuve du réacteur nucléaire, à l'intérieur de colonnes de thermocouples 4, la piscine du réacteur 2 est remplie d'eau jusqu'à un niveau 5 tel qu'une partie des colonnes de thermocouples 4 située au-dessus du couvercle de cuve et l'extrémité saillante des thermocouples 3 par rapport aux colonnes 4 soient émergées au-dessus du niveau 5 de l'eau dans la piscine 2.

Le dispositif d'extraction suivant l'invention désigné de manière générale par le repère 6 comporte un moyen de traction constitué par un palan électrique 7 suspendu au chariot 8 d'un pont roulant 9 monté mobile sur des rails de roulement fixés sur une partie de la structure du bâtiment réacteur 1 constituant le bord supérieur de la piscine 2.

Le pont roulant 9 comporte une poutre supérieure 11 sur laquelle se déplace le chariot 8 et un plancher de travail inférieur 12 sur lequel sont placés le poste de conduite 13 du pont roulant et le clavier de commande 14 du palan de levage 7.

Le dispositif d'extraction 6 comporte une chaîne 16 constituant le brin de levage vertical du palan 7, traversant le plancher 12 par une ouverture et reliée, à sa partie inférieure, en-dessous du plancher 12, à un dynamomètre 17 constitué de préférence par une jauge de contrainte.

Une passerelle d'intervention 18 à laquelle on peut accéder par une échelle 19 est fixée au-dessus du niveau 5 de la piscine. Une nacelle 18a fixée sous la passerelle 18 permet à un opérateur 20 d'intervenir au niveau des extrémités saillantes des thermocouples 3.

Une seconde chaîne 22 placée dans le prolongement de la chaîne de levage 16, en-dessous du dynamomètre 17, traverse la passerelle d'intervention 18 dans la direction verticale et porte, à son extrémité, un dispositif 23 de fixation et de mise en vibrations du thermocouple 3 en cours d'extraction. L'opérateur 20 peut, en particulier, réaliser l'accrochage de l'extrémité du thermocouple 3 au dispositif 23, depuis la nacelle 18a.

Le dispositif de fixation et de mise en vibrations 23 comporte un transducteur d'ultrasons qui sera décrit ci-après et qui est relié par un câble de liaison 25 à un générateur d'ultrasons 26 disposé sur le bord 10 de la piscine. Un second opérateur 27 assure la mise en fonctionnement, le réglage et l'arrêt du générateur d'ultrasons 26, depuis le bord 10 de la piscine.

Un troisième opérateur 28 assure la commande du palan 7 grâce au clavier 14, depuis le plancher de travail 12.

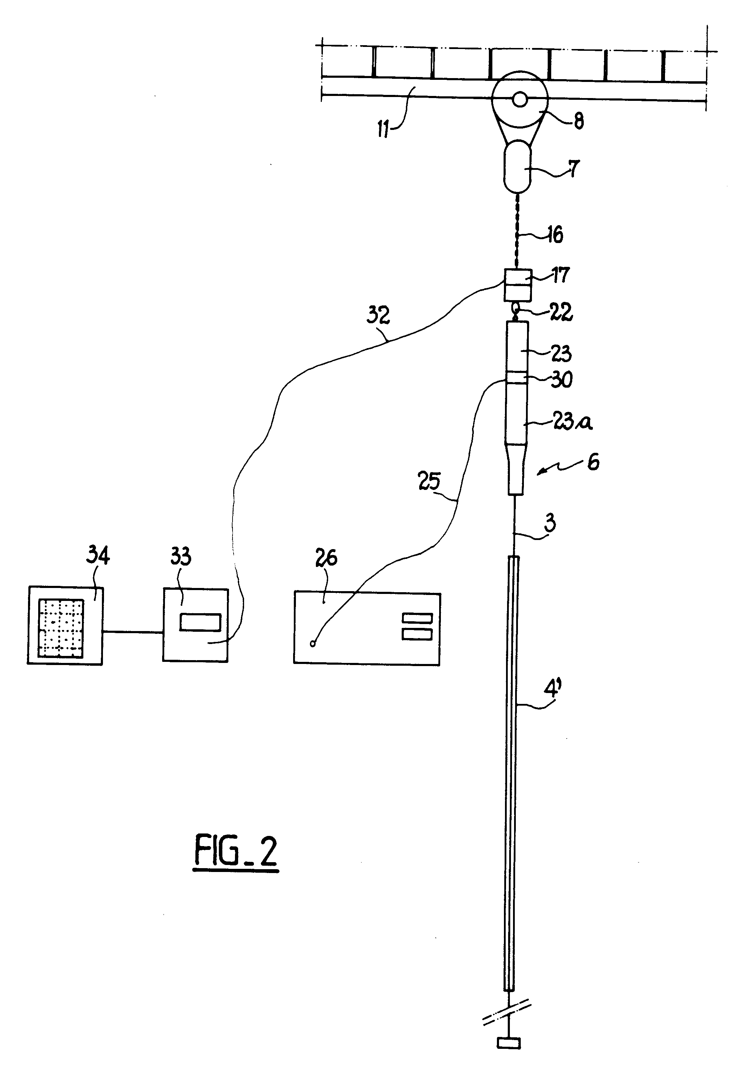

Sur la figure 2, on a représenté à plus grande échelle le dispositif d'extraction utilisé dans la mise en oeuvre du procédé suivant l'invention tel que représenté sur la figure 1.

Le thermocouple 3 est engagé dans une direction axiale, à l'intérieur d'un canal 4' d'une colonne de thermocouple et comporte une partie saillante par rapport à l'extrémité supérieure du canal 4'.

Le dispositif de fixation de l'extrémité du thermocouple est constitué par le support 23a d'un transducteur d'ultrasons 30 relié par le câble 25 au générateur d'ultrasons 26. La partie inférieure du support 23a du transducteur 30 comporte un mandrin ou des mâchoires de serrage permettant d'assurer un accrochage efficace de l'extrémité du thermocouple 3 saillante par rapport à la colonne de thermocouple. L'accrochage de l'extrémité du thermocouple peut être réalisé, avant le démarrage de l'opération d'extraction, par l'opérateur 20, depuis la plateforme 18a.

La partie inférieure du support 23a constitue également un guide d'ondes permettant de transmettre les ultrasons générés par le transducteur 30 au thermocouple 3.

Le transducteur 30 est constitué par des disques en un matériau possédant des propriétés piézoélectriques, si bien que ces disques produisent des microdéplacements longitudinaux, c'est-à-dire dirigés suivant l'axe du support 23a du dispositif 23, lorsqu'ils sont excités par un courant électrique de forme sinusoïdale dont la fréquence peut être ajustée. L'excitation du transducteur 30 est réalisée à partir du générateur 26 qui comporte un générateur à basse fréquence fournissant une onde sinusoïdale réglable en fréquence et en amplitude et un amplificateur de forte puissance. La sortie de l'amplificateur de puissance est couplée au transducteur, par l'intermédiaire d'un transformateur. Les microdéplacements du transducteur 30 sont transmis au thermocouple 3 et amplifiés par la partie inférieure du support 23a du dispositif 23. L'extrémité du thermocouple 3 en saillie par rapport au canal 4' de la colonne de thermocouple est couplée à la partie inférieure du support 23a, comme il a été décrit plus haut, c'est-à-dire à la partie du support subissant les déplacements de plus forte amplitude, dans la direction longitudinale. L'énergie vibratoire est transmise sur toute la longueur du thermocouple 3 engagé dans le canal 4' de la colonne de thermocouple 4.

Le thermocouple 3 est soumis à un effort de traction dirigé suivant l'axe du canal 4', exercé par le palan 7, par l'intermédiaire des brins de levage 16 et 22 et de la jauge de contrainte 17 intercalée entre les brins 16 et 22.

La jauge de contrainte 17 est reliée par un câble 32 à un dynamomètre 33 assurant l'alimentation de la jauge 17 en courant électrique et le recueil des signaux électriques émis par la jauge de contrainte 17. Les signaux électriques de la jauge 17 sont traités par le dynamomètre 33 dont la sortie est reliée à un enregistreur 34 permettant un affichage et un enregistrement des valeurs de la traction exercée sur le thermocouple 3 par le palan 7.

Le dynamomètre 33 et l'enregistreur 34 sont disposés, au voisinage du générateur d'ultrasons 26, sur une console reposant sur le bord supérieur 10 de la piscine 2.

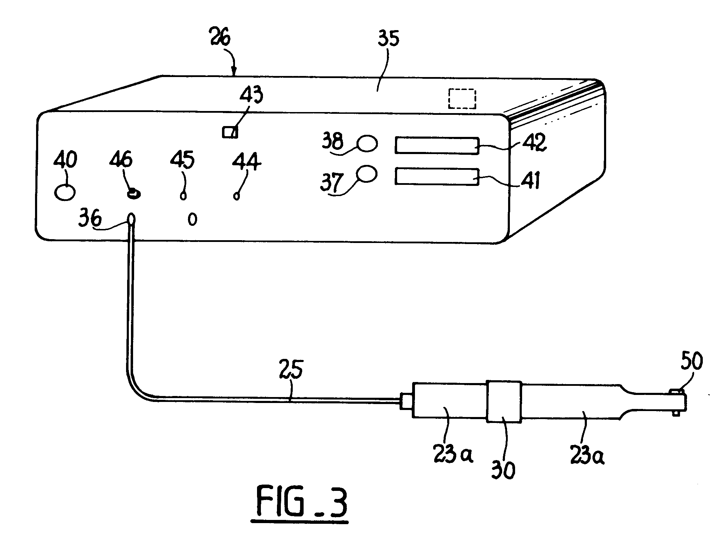

Comme il est visible sur la figure 3, le générateur d'ultrasons 26 est constitué par un boîtier 35 à l'intérieur duquel sont disposés le générateur à basse fréquence, l'amplificateur de puissance et le transformateur constituant les éléments actifs du générateur. Le boîtier 35 comporte sur sa face avant les bornes de sortie 36 du transformateur auquel sont reliés deux conducteurs du câble 25. Ces conducteurs sont reliés, à leurs autres extrémités, aux cellules piézoélectriques du transducteur 30 dont le générateur 26 assure l'excitation à une fréquence réglable.

La face avant du boîtier 35 porte un bouton de réglage de la fréquence d'excitation 37, un bouton de réglage du niveau du courant d'excitation 38 ainsi qu'un bouton 40 de réglage de la durée des impulsions transmises au transducteur 30.

Un voyant 41 permet d'afficher la fréquence du courant d'excitation et un voyant 42, le niveau de puissance de ce courant.

Divers voyants sont également disposés sur la face avant du boîtier 35 et en particulier un voyant 43 d'alimentation du générateur 26 en courant électrique, un voyant 44 de signalisation de surchauffe du thermocouple et un voyant 45 relatif à l'émission basse fréquence du générateur 26.

Le support 23a du dispositif 23 de mise en vibrations du thermocouple comporte à son extrémité dans laquelle on vient fixer le thermocouple 3 une vis 50 de serrage du mandrin ou des mâchoires de fixation du thermocouple. Les vibrations de direction longitudinale émises par le transducteur 30 sont ainsi transmises au thermocouple, par l'intermédiaire de la partie inférieure du support 23a constituant un guide d'ondes.

On va maintenant décrire, en se référant à l'ensemble des figures, une opération d'extraction d'un thermocouple engagé, par l'intermédiaire d'une colonne de thermocouples, à l'intérieur du coeur d'un réacteur dont la cuve est placée sous eau dans la piscine du réacteur, comme représenté sur la figure 1.

Dans un premier temps, le support 23 du transducteur 30 est relié au dispositif de levage 6, par l'intermédiaire d'un étrier et de la jauge de contrainte 17. On réalise ensuite le couplage de l'extrémité du thermocouple 3 au support du transducteur 30 en réalisant le serrage de l'extrémité du thermocouple dans la partie d'extrémité inférieure du support 23a. Le dispositif de mise en vibrations 23 comportant le transducteur 30 est relié par le câble coaxial 25 au générateur d'ultrasons 26. Le générateur d'ultrasons est mis en tension et le bouton de réglage du niveau de puissance 38 est placé dans sa position correspondant à la puissance minimale. Le générateur 26 est mis en fonctionnement ; la puissance affichée sur l'indicateur 42 et exprimée en mA (valeur du courant d'excitation) correspond au niveau minimal de puissance.

Le générateur 26 comporte une plage de réglage d'une amplitude sensiblement égale à 1,5 kHz, cette plage s'étendant de 11 à 12,5 kHz. L'indicateur de fréquence 41 affiche la valeur de la fréquence avec une résolution de 10 Hz.

Un sélecteur 46 du choix du mode de fonctionnement du générateur et comportant deux positions correspondant à une utilisation en rafales du générateur ou à une utilisation en continu, est placé sur la position utilisation en continu. Le mode de fonctionnement en continu n'est utilisé qu'au niveau minimal de puissance pour éviter toute surchauffe locale du thermocouple 3.

Une traction est exercée sur le thermocouple par le palan 7 du dispositif de traction 6. La valeur de la traction sur le thermocouple est limitée à 150 daN. On effectue un réglage de fréquence en utilisant le bouton 37 pour régler le générateur 26 sur la fréquence de résonance mécanique du thermocouple. Cette fréquence est obtenue en effectuant un balayage dans la plage de fréquence entre 11 et 12,5 kHz et en fixant la fréquence à la valeur obtenue lorsque le niveau de puissance donné par l'indicateur 42 est maximal.

On place le sélecteur de mode de fonctionnement du générateur d'ultrasons sur la position de fonctionnement utilisation en rafales, c'est-à-dire en mode impulsionnel.

On augmente progressivement le niveau de puissance, jusqu'au moment où l'on repère sur le dynamomètre 33, une chute de l'effort de traction.

Le bouton de réglage 40 de la durée d'impulsion est placé sur la position correspondant à une durée d'impulsion des ondes ultrasonores au plus égale à 5 secondes, lorsque le niveau de puissance est à sa valeur maximale.

Si l'extraction ne peut être effectuée en une seule opération, on effectue une nouvelle recherche de la fréquence de résonance comme décrit plus haut, avant de réinjecter une forte puissance en mode impulsionnel. En effet, au cours de l'essai d'extraction qui a été effectué, les caractéristiques de la charge accouplée au dispositif de mise en vibrations 23 ont été modifiées, par exemple par élévation de température du thermocouple ou déplacement de celui-ci à l'intérieur de son logement. Cette nouvelle recherche de la fréquence de résonance permet également d'obtenir un refroidissement de l'ensemble du dispositif et du thermocouple.

Au cours de plusieurs essais, on a pu effectuer l'extraction de thermocouples, par étapes successives, en utilisant une fréquence de mise en vibrations de l'ordre de 11,5 kHz ou un peu inférieure, la traction exercée sur le thermocouple étant de l'ordre de 150 daN dans le cas d'un thermocouple fortement bloqué, de 135 daN dans le cas d'un thermocouple moyennement bloqué et 105 daN dans le cas d'un thermocouple faiblement bloqué.

Dans tous les cas, la mise en vibrations du thermocouple par des impulsions d'une durée de 5 secondes au niveau maximal de puissance a permis de diminuer sensiblement la force nécessaire à exercer sur le thermocouple, pour effectuer son extraction, tout en évitant un échauffement du thermocouple, repérable grâce au voyant (44).

Le réglage du générateur d'ondes ultrasonores de manière à émettre des ondes à fréquence variable permet de déplacer, le long du thermocouple, la position des ventres et des noeuds de vibration et ainsi de faciliter le fractionnement des dépôts entre le thermocouple et l'élément tubulaire dans lequel est logé ce thermocouple.

On a ainsi pu effectuer l'extraction de thermocouples introduits dans le coeur d'un réacteur nucléaire à eau sous pression par l'intermédiaire de colonnes de thermocouple, en évitant toute rupture de ces thermocouples.

L'invention ne se limite pas au mode de réalisation qui a été décrit.

C'est ainsi qu'on peut imaginer d'utiliser un dispositif différent d'un palan pour exercer une traction sur un thermocouple ou un autre corps allongé pendant sa mise en vibration sous l'effet d'ultrasons de direction longitudinale.

On peut également utiliser des moyens différents de ceux qui ont été décrits pour produire des vibrations de direction longitudinale dans le corps allongé.

Le procédé et le dispositif suivant l'invention peuvent être utilisés pour réaliser l'extraction de corps allongés différents de thermocouples et par exemple pour réaliser l'extraction de doigts de gant pénétrant dans la cuve d'un réacteur nucléaire à eau sous pression à l'intérieur de tubes d'instrumentation traversant le fond de la cuve.

L'invention peut également être utilisée en dehors du domaine de l'exploitation des réacteurs nucléaires.

**Revendications**

1.- Procédé d'extraction d'un corps allongé (3) introduit dans un élément tubulaire (4) suivant sa direction axiale, par traction sur une de ses extrémités dans la direction axiale de l'élément tubulaire (4) et par mise en vibration simultanée de ce corps allongé (3), caractérisé par le fait qu'on émet des ondes dans un domaine de fréquence proche des ondes ultrasonores depuis l'extrémité du corps allongé (3) sur laquelle on exerce la traction et dans sa direction axiale, pour assurer sa mise en vibration et qu'on effectue un réglage de la fréquence des ondes ultrasonores, de manière à déplacer le long du corps allongé (3) les ventres et les noeuds de vibration engendrés dans le corps allongé (3) par les ondes ultrasonores.

2.- Procédé suivant la revendication 1, caractérisé par le fait que les ondes ultrasonores sont émises par impulsions d'une durée réglable.

3.- Procédé d'extraction suivant l'une quelconque des revendications 1 et 2, dans le cas d'un thermocouple introduit dans le coeur d'un réacteur nucléaire à eau sous pression, par l'intermédiaire d'une colonne de thermocouple (4), caractérisé par le fait que la fréquence des ondes ultrasonores est réglée à une valeur comprise entre 11 et 12,5 kHz, la force de traction sur le thermocouple (3) étant au plus égale à 150 daN et les ondes ultrasonores étant émises par impulsions d'une durée au plus égale à 5 secondes.

4.- Dispositif d'extraction d'un corps allongé (3) introduit axialement dans un élément tubulaire (4, 4') comportant un moyen de traction (6, 7) ayant des moyens de liaison à une extrémité du corps allongé (3) et des moyens de mise en vibration (23) du corps allongé, caractérisé par le fait que les moyens de mise en vibration sont constitués par un générateur d'ultrasons (26) associé à un transducteur (30) intercalé entre les moyens de liaison du moyen de traction (6, 7) et l'extrémité du corps allongé (3) et disposé suivant l'axe d'actionnement du moyen de traction (6, 7).

**5.-** Dispositif suivant la revendication 4, caractérisé par le fait que le transducteur d'ultrasons (30) est monté dans un support (23a) dont une partie est reliée à l'extrémité du corps allongé (3) et constitue un guide d'ondes et dont l'autre partie est reliée au dispositif de traction (6, 7), les deux parties du support (23a) étant disposées de part et d'autre du transducteur (30).

**6.-** Dispositif suivant l'une quelconque des revendications 4 et 5, caractérisé par le fait qu'un moyen de mesure de traction (17) est intercalé entre le moyen de traction (6, 7) et le transducteur (23, 30) relié au corps allongé (3).

**7.-** Dispositif suivant l'une quelconque des revendications 4, 5 et 6, caractérisé par le fait que le générateur d'ultrasons (26) associé au transducteur (30) comporte des moyens de réglage de la fréquence (37), des moyens de réglage de niveau de puissance (38), un sélecteur (46) du mode de fonctionnement du générateur d'ultrasons (26), soit en continu, soit par impulsions, un moyen de réglage de la durée des impulsions d'ondes ultrasonores (40) et des moyens d'affichage (41, 42) de la fréquence et du niveau de fréquence de l'émission ultrasonore.

**FIG.1**

FIG_2

FIG . 3

EP 0 469 962 A1

Office européen
des brevets

# RAPPORT DE RECHERCHE EUROPEENNE

Numero de la demande

EP 91 40 2050

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | EP-A-0 175 977 (WESTINGHOUSE)<br>* Page 3, lignes 1-25; page 6, ligne 21<br>- page 7, ligne 11; page 8, lignes<br>16-24; figure 3 *<br>--- | 1-7 | G 21 C 17/10<br>G 21 C 19/10<br>E 21 B 31/00 |
| A | US-A-3 168 140 (BODINE)<br>* Colonne 1, lignes 11-16; colonne 2,<br>lignes 15-19; revendication 1; figure 1<br>*<br>--- | 1,4-5 | |
| A | US-A-3 500 908 (BARLER)<br>* Abrégé; colonne 1, lignes 41-47;<br>figures 1-2 *<br>----- | 1,4-5 | |

**DOMAINES TECHNIQUES RECHERCHES (Int. Cl.5)**

G 21 C
E 21 B

Le présent rapport a été établi pour toutes les revendications

| Lieu de la recherche | Date d'achèvement de la recherche | Examinateur |
|---|---|---|
| LA HAYE | 29-08-1991 | DEROUBAIX P.G.M. |